# EUROPEAN PATENT APPLICATION

(11) **EP 1 691 329 A2**
(43) Date of publication of application: **16.08.2006**
(21) Application number: 05077836.4
(22) Date of filing: 12.12.2005
(51) Int. Cl.: G06Q 10/00

(54) **Method, device, computer program and computer program product for controlling a digital information technology IT infrastructure**

(30) Priority: 12.12.2004 NL 1027723
(71) Applicant: Netdialog B.V., 3723 HA Bilthoven (NL)
(72) Inventor: Whalen, Paul Andrew, 3511 XE Utrecht (NL)
(74) Representative: Dohmen, Johannes Maria Gerardus

(57) **Abstract**

Method, device, computer program and computer program product for the automated control of a digital information technology IT infrastructure comprised of a multitude of configurable IT components (2, 3, 4, 5) arranged for supporting processes (1) to be executed by the IT infrastructure. The IT components (2, 3, 4, 5) in question are grouped, among other things, on the basis of their functionality in the IT infrastructure, by means of specifications data and activity data, wherein the obtained groups are controlled as IT services (6, 7, 8, 9) within the IT infrastructure.

## Description

### DESCRIPTION

The invention relates to a method and a device for the automated control of a digital information technology IT infrastructure.

In its most general form, an IT infrastructure consists of a collection of digital processors or computers interacting in a network, and of adjustable or configurable peripheral devices controlled by these computers such as data input and output devices, printers, data storage devices, security equipment and network switches for exchanging data between the various computers and the peripheral devices.

The computers in the network may be arranged according to a certain hierarchy, for example one or more so-called control or host computers and one or more client computers controlled by the host computers. The exchange of data between the various computers and the peripheral devices and the processing of the data itself is in that case determined by software loaded in the computers and the peripheral devices in question.

The computers and the peripheral devices generally have a large number of technical functions and properties, both in regard to the support that a computer or a peripheral device can provide to a process, and in regard to the manner in which the computers and the peripheral devices operate in the IT infrastructure itself. Think in this last regard of how data exchange, data storage, processing capacity, etc take place. Depending on, for example, the process to be supported, one or more of these functions is (are) selected based on its applicability. Furthermore, certain functions may be permanently set and/or changed during use, etc. Therefore in the context of this description these computers and peripherals are generally referred to as configurable IT components.

The IT components (hardware) and the programs (software) together form an IT infrastructure whose structure and composition may vary from case to case, depending on the processes to be supported by the IT infrastructure. Generally, a distinction can be made in this regard between administrative processes (also called business processes), which are used for supporting the operational management of a business, such as the processing of orders, and production processes, which are used for the production of goods in a company.

The IT infrastructure for production processes is generally created for a particular production process and thus usually comprises specific software for controlling production means. The IT infrastructure for supporting business processes on the other hand, generally has a more standardised structure. Use is made of standard software packages, such as accounting programs, word processing programs, electronic mail or e-mail programs, etc., which provide services to a process. Furthermore, standardised peripheral devices are generally used, such as printers, network switches, data storage devices and the like, which are generally called hardware.

The interaction between the IT components is based on one or more objectives, on the basis of which objectives the IT infrastructure is expected to support the processes. Examples of these objectives are the execution of an administrative process or a production process at a specific point in time, or the processing of particular amounts of data within a defined period of time. There are of course other objectives that are conceivable, such that the realisation of these objectives require that the performance or the services to be provided by an IT infrastructure to a process must be adapted.

In practice, these service objectives are realised by individually configuring the various IT components in an IT infrastructure according to their technical functions and performance. To that end, a so-called service layer is created on top of the existing technology, via which the various IT components are configured, depending on the objectives in question. Furthermore, special configuration products have been developed for this purpose, focussed on the business processes that a user wants executed. Although the latter approach appeals more to a business user's perception, these products produce exactly the same result, namely: the configuration of individual IT components, specifically adapted to realising the desired service objectives.

In addition to realising the desired service objectives, it is also important to be able to control the configured IT components while they are operating, for example in the event of a malfunction or when the IT infrastructure needs to temporarily support a process or processes according to changed or adapted objectives. A few examples of such changed objectives are making a higher processing capacity temporarily available by deploying additional computers, increasing the storage capacity by making additional storage capacity available, increasing the data rate, the data input and output rate, etc.

In practice a control system designated by the acronym SMARTS ("System Management ARTS") is known in particular for controlling an IT infrastructure. This system correlates events that occur in an IT infrastructure with problems that are known in advance, with a view to proposing a suitable corrective measure or measures. It will be understood that unless a respective event and a respective problem have been programmed into the system in advance, the system as such will not be able to respond to unknown events or unknown problems in an adequate manner. Other pre-programmed control systems are known in practice, for example by the names of "Remedy Business Service Management" and "Tivoli Business Service Management".

In the prior art a control system is known under the name of "Spectrum Integrity", in which IT components are associated with a business process on the basis of the service or services to be delivered by an individual IT component to the process. In this model, it is not possible to relate the functioning of an IT component to the effect it has on the realisation of the desired objectives. Although problems with a respective IT component are associated with a service to be provided, it is by no means clear in that case whether the functioning of the IT component in question actually contributes to a respective process, with the risk of unnecessary or irrelevant error messages being generated for various processes.

Furthermore, these known management systems lack a learning curve by which an estimate can be made, on the basis of new errors, of the influence of these new errors on the performance of a respective process.

In summary, it can be stated that the currently known techniques for configuring and controlling IT components for supporting processes by an IT infrastructure in accordance with pre-defined service objectives and actively controlling the IT infrastructure, are all somehow based on associating the processes to be supported and the objectives to be realised to the available IT components, which are configured and controlled in accordance with these associations. In particular, in the case of a large IT infrastructure with a relatively large number of processes to be supported, this approach leads to highly complex configurations, in which eventually every component in an IT infrastructure undesirably influences all the other components and other processes.

With regard to actively controlling the IT components, such an IT infrastructure exhibits the problem that the various processes, each having their own objectives and requirements, are dependent on the same IT components, such that it is practically impossible to manage and control each process separately.

This is disadvantageous in particular because of the continuously increasing rate with which IT components and the software used in IT infrastructures are being revised and updated, such that the IT components in question need to be reconfigured time and again in order to be able to continually achieve the desired objectives.

Accordingly, it is a primary objective of the present invention to make it possible to associate the configurable IT components to a process or several processes in a flexible manner, in particular for business processes, in accordance with the objectives on which the process in question is based, in order that the support of a process or processes by the IT infrastructure can be controlled in an appropriate manner based on these objectives.

Another objective of the present invention is to convert the support of a component-oriented architecture by the IT infrastructure into a service-oriented architecture. This means that instead of controlling IT components as separate units or types, it must be possible to execute the control of the IT infrastructure in terms of IT services, i.e. on the basis of the functionality and the added value delivered to a process or processes.

In order to accomplish the above and other technical objectives, and to provide a solution to the problems encountered in adapting and controlling IT components, the invention provides a method for the automated control of the use of IT components in a digital IT infrastructure comprised of a multitude of configurable IT components that are operatively interconnected for technically supporting at least one process to be executed by the IT infrastructure, wherein a specifications data file of a respective IT component is available, which file comprises specifications data representative of the technical properties and functions of the IT component in question, characterized by the following steps:
- reading specifications data from the specifications data file of a respective IT component;
- generating and storing first linkage data from the specifications data of a respective IT component as read, which first linkage data indicates a link between the IT component in question with one or more logical IT services on the basis of the technical support to be provided to a logical IT service by the IT component in question;
- generating and storing second linkage data, which data indicates a link between one or more logical IT services and one or more virtual IT services on the basis of the technical support to be provided to a virtual IT service by a logical IT service; and
- controlling the use of a respective IT component for the purpose of supporting at least one process, on the basis of the first and second linkage data as stored.

The invention is primarily based on the insight that it is not the properties of an IT component itself but the contribution of such an IT component to a process or processes that is important for realising the desired objectives associated with such process. That is, the invention is based on the insight that tasks and functions in a process can be performed by various IT components, providing of course that they are suitable for that purpose.

An IT component, such as a network switch, generally comprises hardware and software suitable for performing connectivity tasks, i.e. one or more processors, memory, network cards and suitable drivers, etc. According to the inventive concept, the hardware and software can be used not only for performing connection tasks but also, for example, for supporting security tasks.

In the method according to the invention, the suitability of an IT component to supporting a process is not determined by a direct relation between a respective IT component and one or more processes supported by the component, but by having the IT components operate in one or more distinct IT services, called logical IT services within the framework of the invention, and wherein the logical IT services support one or more so-called virtual IT services, which in turn support the process or processes to be executed.

Within the framework of the invention, logical IT services comprise concrete technical functions that an IT component is capable of performing. For example, in terms of hardware, the storage of an amount of data in the available memory, or, the processing capacity provided by the processor or computer present in an IT component may be considered. In terms of software, use may be made of the software contained within an IT component such as drivers, and the like, for controlling a printer, etc.

Examples of virtual IT services used within the framework of the invention include data storage services, connectivity services, security services, etc. The term virtual indicates that these IT services cannot directly be traced back to identifiable software or hardware, but are defined artificially or in an abstract sense according to the support that is required for the execution of desired processes by the infrastructure.

Consequently, the method according to the invention is based on the technical problem of linking or assigning the technical functions and properties of a respective IT component to a process or processes so as to eventually realise the desired objectives, without the need to assign a respective IT component itself specifically to a respective process.

As is generally known, the technical functions and properties of every IT component are contained in an electronic, digitally available specifications file. Such a specifications file may be available in or on a respective IT component itself, for example stored in an internal or "on-board" memory, or stored in a remote central data memory, for example. Of course, it is even possible to input such data manually.

With the first step, according to the invention, of reading specifications data from the respective IT component, the relevant technical functions and properties of the IT component are digitally collected.

In another step of the method according to the invention, the digital data as read and collected is automatically processed by interpreting the data in the light of the aforesaid logical IT services. That is, the technical properties of an IT component are grouped as logical IT services. To that end, first linkage data is generated and stored, which data indicates a link between the respective IT component and one or more logical IT services based on the technical support to be provided to a logical IT service by the IT component in question. Thus, if it appears from the specifications data as read that an IT component contains drivers that are capable of controlling a printer, for example, the component in question can be assigned to or linked with a logical IT service that provides data output services. In accordance with the inventive concept, logical IT services may be pre-defined, but they may also be created automatically based on the specifications data from the IT components as read.

In yet another step of the method according to the invention, links are established between the logical IT services, i.e. at component level, and the virtual IT services, i.e. at process support level, by generating and storing second linkage data, which data indicates a link between one or more logical IT services and one or more virtual IT services on the basis of the technical support to be provided to a virtual IT service by a logical IT service. In accordance with the inventive concept, virtual IT services may be predefined in this case as well, but they may also be created automatically from the existing logical IT services.

In yet another step of the method according to the invention, the generated linkage data can subsequently be used for controlling the use of a respective IT component or IT components in the IT infrastructure for the purpose of supporting the at least one process.

For example, when a process requires additional transmission capacity, for example, it is possible on the one hand to activate increased usage of an IT component, such as a network switch, but on the other hand it is also possible to deploy the transmission capacity of another IT component, such as a security component, insofar as this transmissions capacity is available after consultation of the linkage data in question. Also, in the event of the failure of IT components, a specific substitute IT component or suitable functions from other IT components may be deployed on the basis of the logical and virtual IT services as generated in accordance with the invention and the respective first and second linkage data.

In the method according to the invention, the IT components are grouped on the basis of their functionality, i.e. the support they can provide in realising a specific objective in a process. The obtained groups of IT components themselves function as IT services within the IT infrastructure, a result of which is that it is not the individual IT components but the IT services in question that form the starting point in controlling the individual IT components for realising the desired process objectives.

It will be realised that the solution according to the invention enables a generic approach regarding how to adapt or how to determine the contribution of various IT components towards the processes to be supported by the IT infrastructure, providing the possibility to compare and relate all the components of an IT infrastructure to each other irrespective of whether if it is a printer, a firewall an application, or even a task that takes place outside the IT infrastructure.

According to the invention, since an IT component is associated with a process or processes via one or more logical and virtual IT services, in the event of a problem with an IT component, the generation of unnecessary error messages for processes to which a respective IT component does not contribute is prevented. Only when a group of IT components according to the invention, operating as a virtual IT service, do not contribute to a process to a sufficient degree, i.e. not within the predetermined objective, will a respective message be generated or corrective measures be taken. Unnecessary messages or requests resulting from the correct or incorrect operation of an individual IT component are effectively prevented by using the method according to the invention.

It will be understood that the allocation of specific IT components, such as specific printers or the like by a process on the basis of a virtual IT service within the framework of fulfilling service level agreements or the like, can in itself be realised in a relatively simple manner by using the method according to the invention, i.e. by allocating a respective logical IT service rather than, for example, directly allocating one or more of the printers that are associated with the service in question. This makes it possible to optimise the logical IT services as provided by the IT components and created by means of the method according to the invention on the basis of, for example, a manager's or user's requirements or objectives for his or her operational processes.

Within the framework of the invention, the handling of or the compliance with a service objective is converted into a generation process, namely: generating one or more tasks for controlling the use of IT components. The invention converts the realisation of a service objective into a technical method with an associated technical task, for example in relation to the run time of a process. The result: control is requested for executing and completing a generation process within a predetermined period. To those skilled in the art, other examples of generation processes are readily conceivable within the framework of the invention.

In a practical embodiment of the method according to the invention, a logical IT service is represented by a data file whose data is grouped by one or more objects, called logical objects. Each logical object represents at least one technical function of the logical IT service in question, and the first linkage data is coupled with a respective logical object in the form of one or more object attributes and its respective data.

A possible logical object is, for example, memory space for data storage. Within that context an attribute is, for example, the size of the storage capacity that is available within a specific IT component. Another logical object is, for example, the transfer of data. Within that context, an attribute is, for example, the transfer rate of a network card in a respective IT component. Many other examples are conceivable to those skilled in the art.

Creating the logical objects and attributes and the linking with the respective IT components takes place automatically on the basis of the specifications data as read.

According to the invention, a virtual IT service is represented by a data file whose data is grouped by one or more objects, called virtual objects. A virtual object represents at least one function of a respective virtual IT service, and the second linkage data is coupled with a respective virtual data object in the form of one or more object attribute and its respective data.

A possible virtual object is, for example, a check for viruses in a transmission function. In that case, an associated attribute can specify which logical IT service can be deployed for this purpose and, for example, which type of virus check should be carried out. Based on the above explanation, several other examples are conceivable to those skilled in the art.

According to the invention, a function to be performed by an IT service can be activated by activating the function of one or more of the objects from the IT service in question. A function to be performed by a process therefore leads to the activation of one or more objects of a respective virtual IT service, which leads to the activation of one or more objects of one or more logical IT services and eventually to the activation of one or more suitable IT components via the associated attributes.

In another embodiment of the method according to the invention, a data file representing a logical or a virtual IT service can be accessed via at least one interface, called a service interface. Furthermore, the data of an object can be accessed via at least one interface, called an object interface. By defining the functionality of a logical or a virtual IT service and a logical or a virtual IT object on an interface basis, it is prevented that specific knowledge of the structure or the data of an IT service or IT object as such is required or that the support provided by an IT service depends on a specific type of IT object. Accordingly, the interfaces are preferably of universal design.

Interfaces may comprise, among others, an interface identification, an interface type, an interface description, interface links, an interface direction, interface attributes and interface attribute data.

In an embodiment of the invention, the logical and the virtual IT services are formed and managed on the basis of their importance in the IT infrastructure. That is, on the basis of, for example, the importance of a respective IT service within the IT infrastructure for executing a respective process. It will be understood that a printing service is an important IT service in a printing process.

According to the invention, an IT service can be defined on an interface basis, i.e. the functionality and importance of an IT service are defined on an interface basis. Within the framework of the invention, a first IT object comprising a first object interface can form a first IT service. A second IT object comprising a second object interface or several second object interfaces can form a second IT service, for example. A third IT service can be defined by, for example, the first IT object comprising the first object interface and a third IT object comprising a third object interface. In other words, an IT service according to the method of the invention can in turn consist of several IT objects and/or several IT services.

In an embodiment of the invention, each IT service may comprise only one service interface, by means of which, for example, a respective virtual IT service can be associated with a process or several processes to be supported by the infrastructure.

In the method according to the invention, an IT service may comprise several service interfaces. The various service interfaces may relate to several object interfaces, a result of which is that there is greater flexibility in associating an IT service with a respective process or processes. The functionality of an IT service can in that case be defined on the basis of the functionality of one or more of the object interfaces in question.

In the foregoing, the use of IT components has been discussed on the basis of their specifications and the link they have with the various logical and virtual IT services.

This is a static situation which, however, can be used for incorporating new IT components in an IT infrastructure, and wherein the steps as described can be carried out automatically for each new IT component that is added to the IT infrastructure, but not, for example, for replacing IT components or for taking into account malfunctions that occur in IT components.

To achieve these ends, in accordance with the method of the invention, an activity data file, also called a 'log file', of a respective IT component is to that end available, which comprises operations data representative of the current technical operation of the IT component in question, such as information regarding the availability of certain technical functions of an IT object. The steps of reading, generating first and second linkage data and controlling the use of a respective IT component are in that case carried out on the activity data of a respective IT component.

By periodically reading and processing this activity data in an automated manner through the mechanism of generating the first linkage data, as discussed in the foregoing, in relation to the logical IT objects and attributes of one or more of the relevant logical IT services, up-to-date information regarding the technical functions that are available to a logical IT service is available to each logical IT service.

On the basis of this information, the virtual IT services can furthermore be updated via the generation of the second linkage data, etc, as described above. A complete status update of the functions that can be provided to processes will in that case also be available to the virtual IT services. Within the framework of the invention, this will eventually lead to the fully autonomous and automated activation of certain IT components for supporting a process or processes by the IT infrastructure within the framework of the desired objectives.

In the case of adding or replacing IT components in an IT infrastructure, an IT component to be added or replaced can be grouped according to a group of logical IT services that already exists for the IT infrastructure in question. In accordance with the method of the invention, an IT component to be added to the IT infrastructure may also lead to a new group or new groups of logical IT services. The independent creation of logical and virtual IT services is representative of the self-learning properties of the invention in controlling and managing an IT infrastructure and supporting the processes to be executed.

Configuration or reconfiguration of the IT services can take place on the basis of service objectives, for example for the purpose of optimising the performance of processes supported by the IT infrastructure.

In an embodiment of the method according to the invention, the grouping and regrouping of the IT services takes place at the level of the object and service interfaces.

According to the invention, the operation of an IT service can be assessed on the basis of one or more service objectives to which a respective IT service contributes via a process.

In an embodiment of the method according to the invention, the assessment of the operation of a respective IT service takes place on the basis of a change in the operation of a respective interface. This makes it possible to monitor and manage an IT service in an efficient manner on the basis of the interface(s) as defined in the foregoing.

According to the invention, the interaction between logical and virtual IT services can also be defined and monitored on an interface basis.

In an embodiment of the method according to the invention, the influence on the ability of the IT infrastructure to achieve service objectives can be determined from the changes in the functionality of the object and service interfaces. It will be understood that it is not necessary to monitor changes in the individual IT components in such a case, but that the influence of a change in the object interface on the service objectives for the infrastructure, for example upon replacement of an IT component, can be directly indicated on the basis thereof. A manager or user of the IT infrastructure does not need to have any knowledge as such of the various IT components and their interaction or the like, yet he will have a direct insight into the influence that a change in an IT component has on the extent to which the IT infrastructure is (still) able to support the processes in a desired manner or to support the processes in a better way.

In yet another embodiment of the method according to the invention, it is possible in that case, in anticipation of the changes in the service objectives that have thus been defined, to determine the changes to be effected in one or more of the IT services that appear to be most successful or are most successful in continuing to achieve the service objectives as much as possible. According to the invention, such a determination can be carried out automatically, so that the method according to the invention has self-learning and adaptive capabilities that enable it to continue to realise the desired service objectives.

The invention also relates to a device for the automated control, in a digital information technology IT infrastructure comprised of a multitude of configurable IT components that are operatively interconnected for technically supporting at least one process to be carried out by the IT infrastructure, of the use of IT components for supporting at least one process, wherein a specifications data file of a respective IT component is available, which data file comprises specifications data representative of the technical properties and functions of the IT component in question, the device comprising:
- reading means for reading specifications data from the specifications data file of a respective IT component;
- grouping means for generating and storing first linkage data from the specifications data of a respective IT component as read, which first linkage data indicates a link between the IT component in question with one or more logical IT services on the basis of the technical support to be provided to a logical IT service by the IT component in question;
- virtualisation means for generating and storing second linkage data that indicates a link between one or more logical IT services with one or more virtual IT services on the basis of the technical support to be provided to a virtual IT service by a logical IT service; and
- control means for controlling the use of a respective IT component for supporting at least one process on the basis of the first and second linkage data as stored.

The reading means, the grouping means, the virtualisation means and the control means are operatively interconnected and arranged for the automated, computer-controlled operation of the various tasks.

In an embodiment of the device according to the invention, the grouping means are arranged for generating a data file whose data are grouped in one or more objects, called logical objects, which each represent at least one technical function of the logical IT service in question and in which the first linkage data are coupled with a respective logical object in the form of one or more object attribute data.

In another embodiment of the invention, the virtualisation means are arranged for generating a data file whose data are grouped in one or more objects, called virtual objects, which each represent at least one function of a respective virtual IT service, and in which the second linkage data are coupled with a respective virtual data object in the form of one or more object attribute data.

In yet another embodiment of the device according to the invention, the control means are arranged for activating a function to be performed by an IT service by activating the function of one or more of the objects of the IT service in question.

To monitor the operation of one or more of the IT services, the invention provides monitoring means which are also arranged for reading activity data representative of the current technical operation of a respective IT component from the activity data file of the IT component in question for generating first- and second linkage data on the basis thereof for forming the logical and the virtual IT services, adapted to the current activity data of an IT component.

It will be understood that the monitoring means may advantageously be operatively connected to the grouping means, the virtualisation means and the control means, wherein the monitoring means read the activity data and subsequently suitably distribute these data over the means in question, for processing the activity data as explained in the foregoing.

The invention provides specification means for associating an IT component with a logical IT service. Optimisation means are provided for associating a process supported by the IT infrastructure with a virtual IT service.

In another embodiment of the device according to the invention, the optimisation means are operatively connected to the monitoring means and the virtualisation means for the purpose of optimising the operation of the virtual IT services. The monitoring means provide an insight into the operation of one or more of the logical IT services, whilst the virtualisation means convert this into a corresponding operation of the virtual IT services, thus providing an insight into the operation and the optimisation of the IT services as a whole.

In another embodiment of the invention, the optimisation means are advantageously operatively connected to the grouping means and the specification means for the automatic grouping and regrouping of IT components, for example for the purpose of optimising the performance of processes supported by the IT infrastructure.

In yet another embodiment of the device according to the invention, the optimisation means are operatively connected to the grouping means and the specification means for the automatic grouping and regrouping of IT components and IT services on the basis of changed processes and/or new processes to be supported by the IT infrastructure. Because of the automatic grouping and regrouping of IT components and IT services, the IT infrastructure has self-learning properties that enable it to adaptively support changes in processes and, if necessary, new processes.

The means that make up the device according to the invention may be provided as separate hardware components. As will be appreciated by those skilled in the art, the invention advantageously provides for the realisation of such means by suitable software to be executed by one or more digital processors or computers.

Accordingly, the invention also provides a computer program comprising program code means for carrying out the method as described above when the computer program is loaded in the working memory of a computer and is executed by the computer in question.

According to the invention, the computer program may be arranged for being integrated in or added to an existing computer application for managing an IT infrastructure, for example.

The invention also relates to a computer program product comprising program code means stored on a medium that can be read by a computer for carrying out the method as described in the foregoing when the computer program product is loaded in the working memory of and is executed by a computer. The computer program product according to the invention may furthermore be arranged for integrating the program code means in or adding the program code means to an existing computer application, such as a computer application for managing an IT infrastructure.

The invention will be explained in more detail hereinafter with reference to the appended drawings.

The drawings are merely schematic representations and must not be construed as limiting the scope of the invention to the steps and means as shown and described herein.

Figure 1 schematically shows a model of the method according to the invention.

Figure 2 schematically shows the model of figure 1 in more detail.

Figure 3 is a flow diagram showing the main steps of the method according to the invention.

Figure 4 schematically shows a detail of the method according to the invention with a possible structure of the logical and the virtual IT services.

Figure 5 is a more detailed schematic view of a model of an IT service with respective interfaces.

Figure 6 is a schematic block diagram of a device for carrying out the method according to the invention, in the most extensive form thereof.

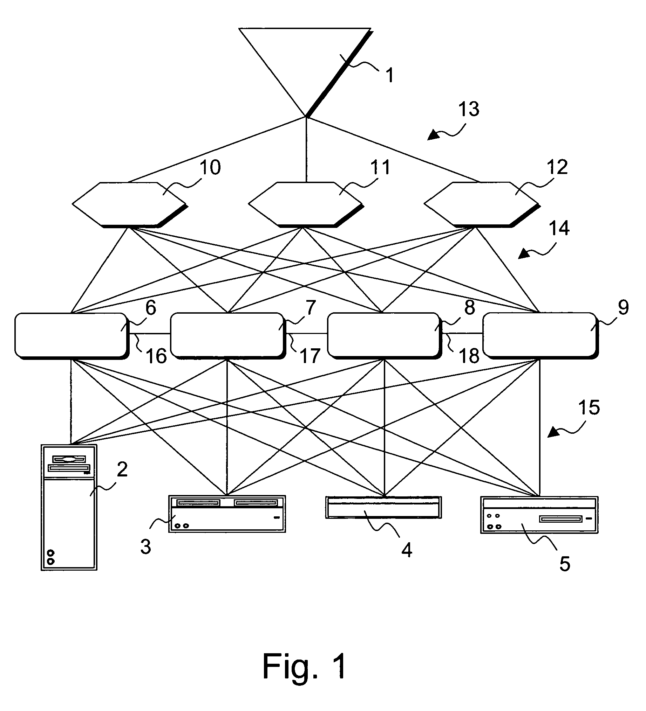

Figure 1 is a general, schematic view of IT components 2, 3, 4, 5 as defined in accordance with the invention for the purpose of supporting a process 1, such as a business process or an administrative process or a production process, in an information technology IT infrastructure.

Reference numeral 2 indicates an IT component in the form of a computer or a digital data processor. An information technology IT infrastructure may comprise a large number of different computers 2 for performing specific tasks, which computers may be arranged according to a specific hierarchical structure. In practice a distinction is generally made between control or host computers and work stations or client computers.

In figure 1, all these computers are represented by reference numeral 2. Reference numeral 3 represents peripheral devices connected to an IT infrastructure, such as printers, data input means and display screens, but also data storage devices and the like.

The computers 2 and the peripheral devices 3 are interconnected via network connections, with the exchange of data between the computers and the peripheral devices taking place via network switches or data switches 4. The network switches 4 ensure that the data being exchanged from one peripheral device to the other peripheral device and from one computer to the other computer or between computers and peripheral devices are delivered to the correct component in the network. The computers 2 and the peripheral devices 3 are to that end provided with a unique identification number, such as an IP number.

Nowadays, protection against undesirable intruders, viruses, and the like constitutes an important element of a professional IT infrastructure; the IT component that is configured for this purpose is indicated by reference numeral 5 in figure 1. Such security IT components are generally called "firewall" in practice.

Reference numerals 10, 11 and 12 indicate so-called process services, such as an accounting program 10, electronic mail processing or e-mail 11 and a word processing program 12. These process services provide services to the process 1 to support this process; within the framework of the invention, these services are also called IT process services. The IT process services are schematically represented by the connecting lines 13 in figure 1.

To give a user or manager an insight into the extent to which the IT components 2, 3, 4, 5 can contribute towards supporting a process 1, so-called virtual IT services 6, 7, 8, 9 have been defined in accordance with the inventive concept, as is shown in figure 1.

Reference numeral 6 indicates a host or control service. Reference numeral 7 refers to storage services and reference numeral 8 indicates connectivity services required for correctly switching the various IT components, users, interfaces and providers so that the process 1 is supported in the desired manner. Reference numeral 9, to conclude, indicates security services for protecting the IT infrastructure as referred to in the foregoing.

It will be understood that in addition to the aforesaid virtual IT services, a person skilled in the art will be able to define many more virtual IT services other than the ones that have been discussed above with reference to figure 1, such as input and output services, with which printers and data readers, for example, may be associated.

The virtual IT services 6, 7, 8, 9 provide support to the process 1, if necessary through the intermediary of one or more of the IT process services 10, 11, 12, as schematically illustrated by means of the connecting lines 14 in figure 1.

In the model of figure 1, the IT components 2, 3, 4, 5 are shown to be grouped in the most general way in relation to the virtual IT services 6, 7, 8, 9. The contribution that a respective IT component 2, 3, 4, 5 can make to a virtual IT service 6, 7, 8, 9 is schematically indicated by means of the connecting lines 15 in figure 1.

The connectivity services 8 are formed or supported by IT components that provide connection services, for example, such as the network switches 4, but also the computers 2, for example. A computer comprises a network card, for example, which supports connections for the various process services (applications) that are executed on the computer. As a result, the computer may also form part of the connectivity service 8 in addition to the host or control service 6. If the network switch 4 comprises a digital processor, the network switch 4 in question can also make processing capacity available to, for example, the virtual host or control service 6 and the virtual security service 9, whilst storage capacity in the switch 4 can be employed for supporting the virtual storage service 7, for example. In addition to supporting the virtual security service 9, the security component 5 can thus make processing capacity of a processor in the security component 5 available to the virtual host or control service 6. Transmission and switching facilities of the security component 5 can be made available to, for example, the virtual connectivity service 8, etc. In other words, an IT component 2, 3, 4, 5 can support several IT services 6, 7, 8, 9.

It will be appreciated that a respective IT component 2, 3, 4, 5 need not necessarily be associated or grouped with all the virtual IT services 6, 7, 8, 9. Furthermore, the virtual IT services 6, 7, 8, 9 can provide services to each other in the most general form, as is illustrated by means of the transverse connecting lines 16, 17, 18.

It is noted that within the framework of the invention an IT component is not confined to a physical component. An IT component may also be a software product or may consist of an IT source that supplies data, or an IT destination to which data are supplied. An IT source and/or an IT destination may be processes that take place outside the IT infrastructure. The extent to which a virtual IT service is unique or indispensable in an IT infrastructure for supporting a process defines the relevance of a respective virtual IT service.

In practice, a very great diversity of the IT components 2, 3, 4, 5 as can be found in an IT infrastructure is possible. Although the respective IT components generally exchange data in accordance with standardised protocols, the functionality may vary considerably from component to component. The invention is based on the insight that it is impracticable, for the purpose of controlling such a large number of different IT components, to know the exact functional properties of each IT component and their use in supporting a respective process 1.

Therefore, in accordance with the method of the invention, the technical functionality and the properties of an IT component 2, 3, 4, 5 are also defined on a service basis. Within the context of the present disclosure, these services are generally referred to as logical IT services.

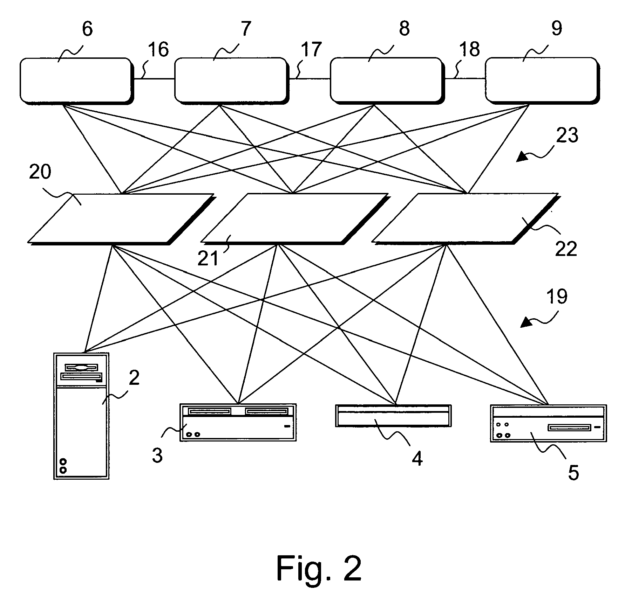

Figure 2 schematically shows a number of logical IT services 20, 21, 22 in relation to the IT components 2, 3, 4, 5 and the virtual IT services 6, 7, 8, 9.

The term logical IT service refers to the direct relation between the services 20, 21, 22 and an IT component 2, 3, 4, 5. This in contrast to the term virtual IT service, which does not indicate a direct relation between the function to be provided by a respective virtual IT service, and, an IT component in the form of a hardware or software product or an IT source and/or an IT destination.

The technical functionality and properties of an IT component are generally contained in the specifications data files of a respective IT component. Such a specifications data file is either present in a respective component itself or available from a remote source, for example a central data file of the manufacturer of a respective IT component. A specifications data file of a printer, for example, includes information about the paper size that can be handled, for example A4, A3, etc, the type of paper, such as thick paper, thin paper or photo paper, for example, whether a stapling machine is available, whether colour printing is available, etc. The specifications data file of a network switch, for example, comprises information about the communication rate, priorities for specific connections, the presence of memory for the storage of data, the type of control processor in the network switch, etc.

In addition to such a specifications data file, modern IT components also have an activity data file or log file, in which current information about the operation of the IT component in question is stored. In the case of the aforesaid printer, such information may indicate that an ink cartridge or a staple module is empty or may relate to other technical malfunctions. For the aforesaid network switch, a malfunction at one or more output ports may be stored in the activity data file, for example, but also information relating to the current workload of the processor, the available storage space in the memory means, etc. It will be understood that the activity date file may also be present in the IT component or in a remote file with which a respective IT component can communicate.

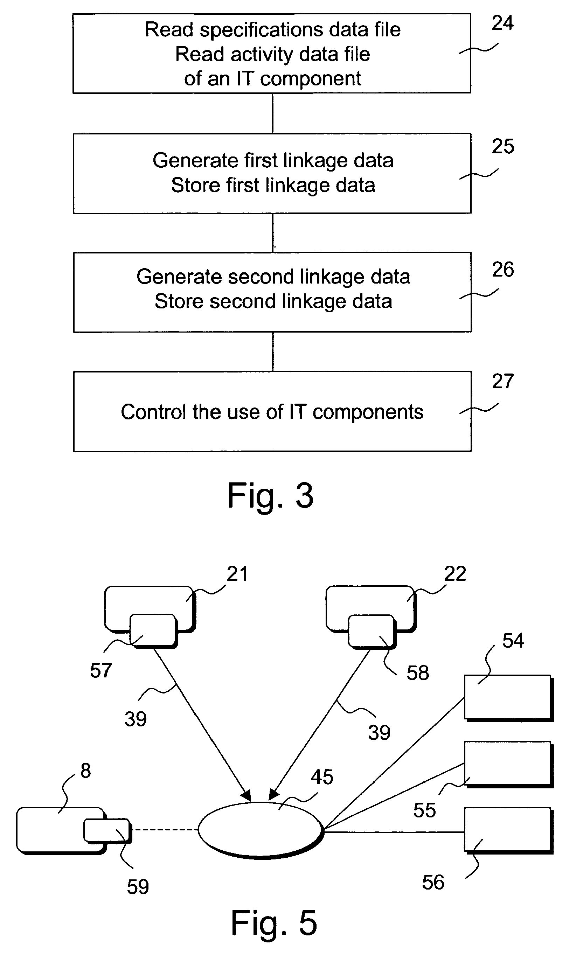

The manner in which the specifications data file and the activity data file of a respective IT component can be accessed may vary from component to component. To prevent that a virtual IT service 6, 7, 8, 9 needs to know the manner of driving or communicating with a respective component 2, 3, 4, 5, the invention provides a method for collecting and grouping the technical functions and properties of a respective IT component 2, 3, 4, 5 through the intermediary of the logical IT services 20, 21 22. For a more detailed explanation, reference is made to the flow diagram that is shown in figure 3.

In figure 3, the specifications data file and, if present, the activity data file of each IT component is read in a first step indicated by reference numeral 24.

From the obtained data, which includes information about the technical functions and properties of a respective IT component, as explained in the foregoing, first linkage data is generated and stored in a further step indicated by reference numeral 25, which first linkage data indicates the link between a respective IT component 2, 3, 4, 5 with one or more (for example predefined) logical IT services 20, 21, 22. That is, the first linkage data couples a respective IT component 2, 3, 4, 5 with one or more of the logical IT services 20, 21, 22 according to the function of a respective logical IT service.

Let us assume that the logical IT service 20 relates to data input and data output, that the logical IT service 21 relates to network connections and that the logical IT service 22 relates to data storage.

From the specifications data as read, for example, from a network switch 4, comprising network cards for making network connections, various processors, printer drivers and internal data storage, first linkage data is generated, which links the network switch 4 in question and its printer driver with the logical IT service 20 for supporting a printing function to be performed, if desired, which links the network cards of the network switch 4 with the logical IT service 21 as regards the making of network connections, and which associates the network switch 4 with the logical IT service 22 for supporting the storage of data. Although this is not shown, the network switch 4 may furthermore be linked with, for example, a further logical IT service that relates to data processing or data control. According to the invention, independent IT services may furthermore be composed in accordance with predefined rules and conditions from the specifications data as read.

Similarly, first linkage data can, according to the invention, be generated from activity data as read, a result of which is that the link, for example, between the network switch 4 and the various logical IT services 20, 21, 22 can be updated. For example, when the printer driver of the network switch 4 is not available for some reason, this can be derived from the activity data and be communicated to the logical IT service 20 in question through the generation of suitable first linkage data.

Similarly, first linkage data can be generated for the other IT components in accordance with the available specifications data and activity data of a respective IT component. In figure 2, the first linkage data, which shows a logical relationship between the IT components 2, 3, 4, 5 and the logical IT services 20, 21, 22, are schematically indicated by means of connecting lines 19.

To link the virtual services 6, 7, 8, 9 with the respective IT components 2, 3, 4, 5, second linkage data linking one or more of the logical IT services 20, 21, 22 with one or more of the virtual IT services 6, 7, 8, 9 are generated from the various logical IT services 6, 7, 8, 9 in yet another step of the method according to the invention, which is indicated by numeral 26. In figure 2, this second linkage data is schematically indicated by means of connecting lines 23. Also in this case, virtual IT services may be predefined and/or virtual IT services may be independently created from the logical IT services, all of this in accordance with predefined rules and conditions.

In the implementation of the method according to the invention, the logical IT services 20, 21, 22 and the virtual IT services 6, 7, 8, 9 are data files containing the respective linkage information.

The links thus made between the IT components 2, 3, 4, 5 and the logical IT services 20, 21, 22 on the one hand and between the virtual IT services 6, 7, 8, 9 and the logical IT services 20, 21, 20 on the other hand, enable a virtual service 6, 7, 8, 9 to refer back to the actual technical realisation by one or more of the IT components 2, 3, 4, 5, through the intermediary of the process services 10, 11, 12, if necessary, for supporting the process 1. Think in this connection of printing a document, checking data for viruses, inputting data from an external IT source (not shown) or retrieving software, for example in the form of a printer driver in the network switch 4, for example for printing a document when one of the printers in the network does not have a suitable driver available, etc.

On the basis of the first and second linkage data thus obtained, and knowledge about the functions assigned to the logical IT services 20, 21, 22, the technical use of a respective IT component 2, 3, 4, 5 can be controlled from a virtual IT service 6, 7, 8, 9 for the purpose of eventually supporting the process, which step is illustrated by reference numeral 27 in figure 3.

It will be understood that neither the process 1 nor a virtual IT service 6, 7, 8, 9 has or needs to have specific knowledge as to which concrete IT component 2, 3, 4, 5 performs a specific task for supporting the process 1. In other words, the IT components 2, 3, 4, 5 need not be assigned to a specific process, as is the case in the prior art, but they can be deployed in a dynamic, flexible manner within the IT infrastructure.

New IT components that are incorporated into the infrastructure are subjected to the above-described steps of reading and generating the linkage data, whilst the replacement of IT components or the occurrence of a malfunction in IT components results in the updating of the various IT services via the activity data.

It will be understood that the method according to the invention as described above can be carried out periodically in a fully automated manner, for example by a specific control or host computer, which can in turn function as an IT component in the infrastructure. Specifications data and activity data of components can also be inputted manually, of course, if necessary with a link to an external data exchange network such as the Internet, for example, for consulting remote specifications data files and activity data files.

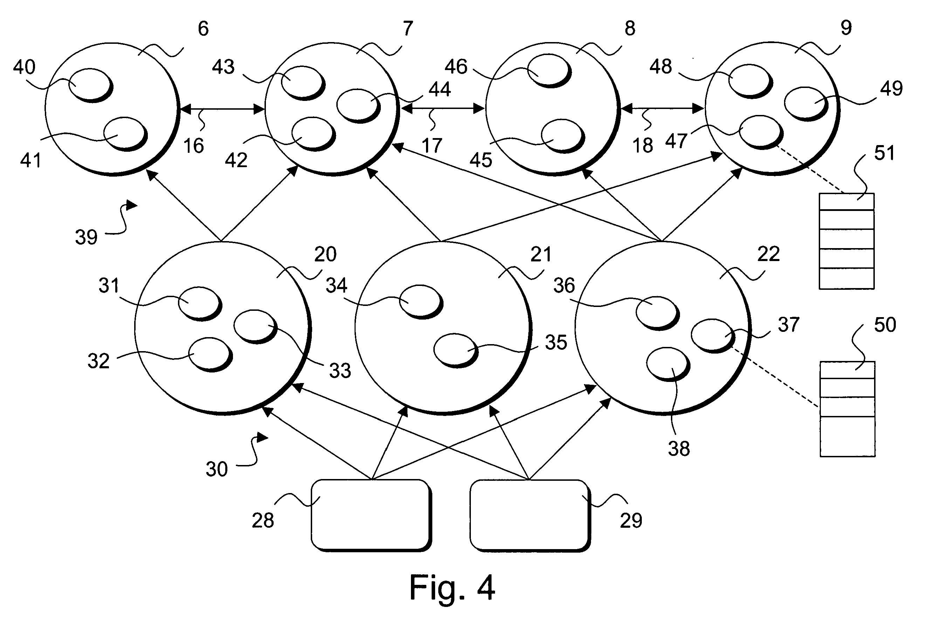

As already mentioned in the foregoing, the virtual IT services 6, 7, 8, 9 and the logical IT services 20, 21, 22 are represented by data files. Figure 4 shows a structure of these data files in a preferred embodiment of the invention.

Reference numeral 28 indicates a specifications data file of an IT component 2, 3, 4, 5, and reference numeral 29 represents an activity data file of an IT component 2, 3, 4, 5. As explained in the foregoing, the files 28, 29 may be available in the memory of a respective IT component 2, 3, 4, 5 itself and/or in a remote source, and be accessible via suitable communication lines. The files 28, 29 are digital data files from which data can be read by using technical means that are known per se. Within the context of the present disclosure, reference numerals 28, 29 are understood to refer also to the manual input of such data.

The logical IT services 20, 21, 22 are data files whose data are grouped in one or more so-called objects 31, 32, 33; 34, 35, and 36, 37, 38, respectively, also called logical objects. These logical objects are sub-data files of the logical IT service (the data file) with which they are associated. Each object represents at least one technical function of the logical IT service in question. The first linkage data is coupled with a respective logical object 38 in the form of one or more object attribute data 50. For the sake of clarity, figure 4 shows only the object attribute data 50 and the logical object to which it is coupled.

In addition to referring to a respective IT component to which it relates, for example by means of a unique identification number or the like, the object attribute data 50 represents the details of the respective technical functions that apply to a respective IT component. Examples of logical objects and object attribute data associated therewith are mentioned in the introduction.

The objects 31-38 are formed in accordance with predefined rules and conditions from the specifications and/or activity data from the specifications data file 28 and the activity data file 29 of an IT component as read. This is schematically indicated by the connecting arrows 30 in figure 4. It will be understood that the forming of the objects and the object attributes takes place in an automated manner. The number of logical objects for every logical IT service depends on the functions and properties of the service in question. Note that within the framework of the invention an object may also comprise software.

Similarly, virtual IT services 6, 7, 8, 9 can be represented by data files which are made up of data files or virtual objects 40, 41; 42, 43, 44; 45, 46 and 47, 48, 49, respectively, as is schematically indicated in figure 4. Also in this case, each object is coupled with object attribute data, such as the object attribute data 51 (schematically represented) for the virtual object 47.

A virtual object 40-49 represents at least one function of a respective virtual IT service 6, 7, 8, 9, and is composed in an automated manner in accordance with predefined rules and conditions from the logical objects 31-38 of the respective logical IT services 20, 21, 22 as schematically represented by the connecting arrows 39. The object attribute data 51 of a respective object 47 comprises, among other things, the second linkage data containing information for the coupling with a respective logical data object 31-38. Examples of virtual objects and associated attribute data have been discussed in the introduction. The number of virtual objects for every virtual IT service depends on the functions and properties of the service in question.

According to the invention, a function to be performed by an IT service, whether it is a virtual IT service 6, 7, 8, 9 or a logical IT service 20, 21, 22, is activated by activating the function of one or more of the objects 40-49 and 31-38, respectively, of the IT service in question. Eventually this will lead to the deployment of a respective IT component 2, 3, 4, 5.

In a preferred embodiment of the method according to the invention, data files that represent an IT service can be accessed via at least one interface, called a service interface. Similarly, the data of an object can be accessed via at least one interface, called an object interface. The generic term IT object as used hereinafter is understood to refer to a logical IT object 31-38 as well as to a virtual IT object 40-49.

In its most general definition, an object interface describes the contribution of a particular IT object to an IT service in general terms defined within the context of the management of the IT infrastructure. Striking examples of object interfaces are, for example, input and output interfaces that generically record the input and output of IT objects, each with their own properties and functions. An IT object may comprise a number of interfaces, depending on the functionality of the IT object in question.

According to the invention, IT services can be defined on the basis of the type of interface by means of such interfaces.

It will be understood that when the functionality of the IT object is defined on an interface basis, precise knowledge of the IT object is not a precondition for the management of the IT infrastructure or, more precisely, for managing the IT infrastructure in order that the objectives within which a process is to be executed can be achieved. For example, it does not matter in that case via which network switch data is exchanged, what does matter is that the exchange of data between the components necessary for executing the process is realised in the IT infrastructure. That is, use is made of the virtual connectivity service 8 for data exchange, and if this virtual connectivity service 8 functions incorrectly, the influence thereof on the execution of the process 1 can be assessed or determined, whereupon suitable measures can be taken. Think in this connection of calling in a manager of the IT infrastructure but also, for example, of automatically regrouping IT objects and IT services on the basis of service objectives for supporting a respective process.

Unlike the prior art, the IT components 2, 3, 4, 5 themselves are not managed in the method according to the invention, but the management is directed at the IT services with which the IT components 2, 3, 4, 5 are associated. In this way unnecessary error messages, for example in the case of a malfunction of an IT component, can be prevented, because an error message will only be generated in case a virtual IT service 6, 7, 8, 9 is insufficiently capable of supporting a respective process 1, whose error message will in that case be relevant for the process 1 in question. For the management of large IT infrastructures comprising several processes, this approach is very advantageous therefore as regards to the efficiency with which these infrastructures can be managed.

Generally, an IT service comprises only one service interface, with which service interface a respective IT service can be associated with a process or with several processes. In other words, IT objects are associated with an IT service by object interfaces, and the IT service itself is associated with a process or processes via a service interface.

From the foregoing it will be understood that the method according to the invention, wherein IT components 2, 3, 4, 5 are managed as IT services within the IT infrastructure, makes it possible in a relatively simple manner to add IT components to an IT infrastructure by simply grouping an IT object and the relevant object interfaces in an IT service. When a respective IT object adds new functionality to the IT infrastructure, this will result in one or more new objects or one or more new IT services being defined, in which case it may be necessary to adapt or extend the interface definitions. Advantageously, the service interfaces for an IT infrastructure are defined depending on the IT services required for supporting a process.

Also when the process or the processes that are supported by the IT infrastructure change or are altered or extended, it may be necessary to regroup the object and service interfaces in order that IT services required for supporting a process are realised through the management thereof.

In the method according to the invention, the operation of an IT service or, put differently, the extent to which an IT service contributes towards supporting a process, can be advantageously defined on the basis of the operation of one or more of the interfaces in question.

Note that in the method according to the invention the operation of an IT service is examined in relation to how it contributes to the process on the basis of one or more service objectives associated with the process in question, in order that corrective measures, for example, will only be taken or proposed if the objectives regarding the execution of a process in a desired manner are not achieved. Think in this regard of the printing of an amount of data on a printer within a specific period of time in a printing process, for example. It will only be necessary to take or propose a corrective measure for the printing process if the desired objectives, i.e. the period of time or the amount of printed data, cannot be realised. The fact that, for example, a single printer exhibits a malfunction, for example no ink or the like, need not in itself result in an action for the printing process in question. Action will only need to be taken within the framework of the management of the IT infrastructure if this malfunction affects the manner in which the process is supported.

Within the context of the method according to the invention, examination of the operation of a respective IT service can take place advantageously on the basis of a change in the operation of a respective interface. The occurrence of such changes can be detected from the fact that the process is being insufficiently supported, for example. This manner of detection is used instead of detection of performance on the basis of thresholds or the like. Testing for changes can be universally implemented, in contrast to testing for thresholds, in which specific, individual thresholds must be defined for every IT infrastructure and for the processes to be supported thereby.

IT components 2, 3, 4, 5 are subject to constant change, in which connection one can also consider the replacement of IT components with new components having different specifications and the liked, which, in the case of threshold testing, makes it necessary to revise the threshold settings.

Examination of the operation of a respective IT service on the basis of one or more service objectives provides the direct possibility of managing the IT infrastructure on the basis of a service agreement, generally indicated by the acronym SLA ("Service Level Agreement") in English professional literature. Those skilled in the art will appreciate that this is the very essence of IT infrastructure management, and in combination with the previously described self-learning and adaptive properties of the method according to the invention, an optimum management of each IT infrastructure with its own features and characteristics can be realised, and, the IT services in question can be optimally deployed for supporting a process or processes to be executed.

This form of optimisation constitutes a special advantage of using the method according to the invention. That is, optimisation not only during normal operation of the IT infrastructure, but in particular also in case of malfunctions or the like, in which case proposals may be presented to enable the continued realisation of the service objectives in the most successful manner as much as possible. Especially in the case of complex IT infrastructures, in which certain adaptations may affect several processes, the influence of the changes to be made can be assessed individually for each process, in which regard advantageous use is made of the inventive concept of managing the IT components 2, 3, 4, 5 as IT services.

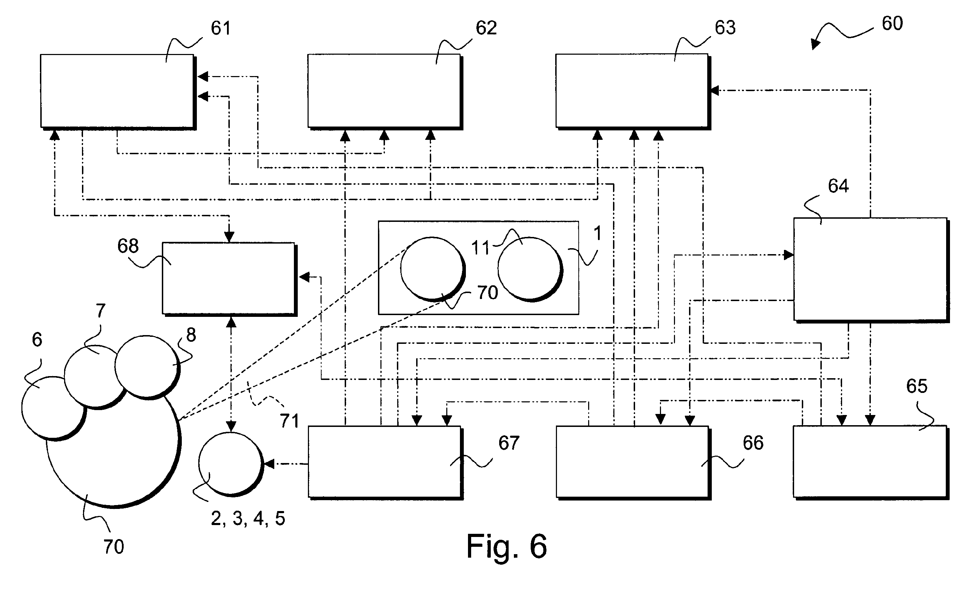

In figure 5 the use of interfaces is illustrated by way of an example. A virtual object 45 of the virtual connectivity service 8 is shown, which object comprises object interfaces indicated by reference numerals 54, 55, 56, respectively. The interfaces 54 relate to storage, for example, the interfaces 55 relate to routing, and the interfaces 56 provide connectivity functions, for example, such as physical connections according to the Internet protocol (IP), the Ethernet protocol or, for example, the transmission protocol that is designated X.25 in practice. The object 45 is linked with, for example, the logical connectivity service 21 and the logical storage service 22 as schematically indicated by the arrows 39.

Each of the IT services may comprise one or more service interfaces, as schematically indicated by reference numerals 57, 58 and 59, via which the objects of a respective IT service can be accessed.

With reference to the interfaces 54-59, these interfaces can be identified with a unique identification for a respective IT service or a respective IT object on the basis of an interface type, an interface description, interface connections, for example the transmission protocol that is used, the interface direction that indicates whether the interface is an input or an output interface, interface attributes and interface data. This list is not complete, of course, and other interface properties may be defined, depending on whether an IT service with which a respective interface is associated needs this for supporting a respective process.

According to the invention, the virtual connectivity service 8 automatically scans the IT object, such as the object 45, for the presence of an interface of the connection type 56, for supporting a process 1 as regards connectivity services. On the basis of this information, the virtual connectivity service 8 can effect the deployment of, for example, the network switch 4, for example via the object 45 in question and the second linkage data contained therein, via the first linage data contained in the logical service 21.

Figure 6 is a schematic view of a device for the control and management of an IT infrastructure in accordance with the method of the invention, which device may be implemented in the form of hardware or software in a computer or in the form of a computer program or a computer program product on a data carrier for loading the computer program into a computer. The device according to the invention can be realised as an independent product or, for example, as a product to be added to an existing management tool of an IT infrastructure.

The various operative connections between the various means that form the device are indicated by means of chain-dotted arrows. The device as a whole is indicated by reference numeral 60.

The device 60 provides means for gaining an insight into the manner in which IT services themselves operate, their interaction and changes, so as to realise the automated usage, management and optimisation of the IT services in the light of the service objectives for supporting an automated digital process.

Reference numeral 1 indicates a process to be supported, such as a business process. This process 1 is supported by one or more process services, among which an e-mail service 11 and, for example, a stock and order management program 70. This program 70 is supported by the virtual IT services 6, 7, 8 as schematically shown in larger-scale detail in the figure and indicated by reference numeral 71.

In its most general embodiment, the device 6 comprises grouping means 61 for generating and storing first linkage data from the specifications data as read from the specifications data file 28 of a respective IT component 2, 3, 4, 5 in accordance with the method of the invention as discussed above. The grouping means 61 are arranged for composing logical IT services 20, 21, 22 from the specifications data as read, as already explained in the foregoing.

Reference numeral 66 indicates virtualisation means, which are operatively connected to the grouping means 61 for generating and storing second linkage data that indicates the link between one or more logical IT services 20, 21, 22 and one or more virtual IT services 6, 7, 8, 9 in accordance with the method of the invention as described above.

The virtualisation means 66 convert data from the IT components into information that is easier to interpret for an operator. The operator is the actual user of the device 60. As already explained with reference to figure 1 and figure 2, the virtual services may in that case be used for representing IT services that actually support the process 1.

Storage means 63 are arranged for the storage of the linkage data as generated by the grouping means 61 and the virtualisation means 66, but also for the storage of the various IT services in the form of data files, as already extensively discussed in the foregoing, for example with reference to figures 4 and 5.

Monitoring means 65 monitor the operation of the IT components 2, 3, 4, 5, to which end they are operatively connected to the grouping means 61 and the virtualisation means 62. The monitoring means 65 monitor the activity of one or more of the IT components by reading activity data representative of the current technical operation of an IT component 2, 3, 4, 5 from the activity data file 29 of the IT component in question.

The grouping means 61 and the monitoring means 65 may comprise communication means (not shown), if desired, for remote communication with specifications and activity files 28, 29 and/or for the manual input of specifications and activity data of an IT component.

The device 60 furthermore comprises specification means 62, which are operatively connected to the grouping means 61 and the storage means 63 for associating an IT component 2, 3, 4, 5 with a logical IT service.

Furthermore, optimisation means 64 are provided, which are operatively connected to the monitoring means 65, the virtualisation means 66 and the storage means 63 for associating the process 1 supported by the IT infrastructure with a virtual IT service 6, 7, 8.

The optimisation means 64 are arranged for storing the observations and are capable of adapting the state of a virtual IT service 6, 7, 8, if desired. The changes in the operation of the IT services that are thus effected are stored in the optimisation means 64 and the storage means 63 as optimisations for the IT infrastructure in question.

The use of IT components 2, 3, 4, 5 is controlled by control means 67, which are to that end operatively connected to the storage means 63, the virtualisation means 66, the specification means 62 and the optimisation means 64. The control means 67 may also be used for the management of IT services that are stored in the form of data files in the storage means 63. Management can take place on a regular basis, taking into account aspects of an IT service to be managed.

Reference numeral 68 indicates reading means for reading data from the specifications data file 28 and/or the activity data file 29 of an IT component 2, 3, 4, 5. Reading means 68 that are suitable for the purpose of the invention are known to those skilled in the art and need not be explicitly explained herein. The reading means 68 are operatively connected to the grouping means 61 and the monitoring means 65.

The optimisation means 64 analyse the data from the monitoring means 65 and decide on the basis of such analysis whether or not services need to be optimised. Optimisation will take place in particular if the process service 70 functions insufficiently or contributes insufficiently to the process 1 for a specific period of time, which can be concluded from changes detected in the operation of the process service 70 itself, including the virtual IT services 6, 7, 8, for example, as explained in the foregoing.

In the embodiment of the device 60 that exhibits the highest degree of automation, the optimisation means 64 are arranged for adaptive and automatic adaptation of the process service 70, so that the device 60 has a self-learning capability, which makes it possible to realise a very efficient management of an IT infrastructure.

Those skilled in the art will appreciate that, based on the above functional specifications of the means 61-67, the device 60 can be realised in various ways without departing from the inventive concept. Thus, the grouping means 61 and the monitoring means 65 may be combined as regards their function of reading data from the specifications data file 28 and/or the activity data file 29 of an IT component 2, 3, 4, 5, for example.

Furthermore, additions and alterations can be effected without departing from the novel and inventive concept as defined in the appended claims.

## Claims

1. A method for automated control of the use of IT components for supporting at least one process in a digital information technology IT infrastructure comprised of a multitude of configurable IT components that are operatively interconnected for technically supporting said at least one process to be executed by said IT infrastructure, wherein a specifications data file of a respective IT component is available, which file comprises specifications data representative of technical properties and functions of said IT component, **characterized by** the steps of:
- reading specifications data from said specifications data file of a respective IT component;
- generating and storing first linkage data from said specifications data of a respective IT component as read, which first linkage data indicates a link between said IT component and one or more logical IT services on the basis of the technical support to be provided to a logical IT service by said IT component;
- generating and storing second linkage data which indicates a link between one or more logical IT services and one or more virtual IT services on the basis of technical support to be provided to a virtual IT service by a logical IT service; and
- controlling the use of a respective IT component for supporting at least one process on the basis of said first and second linkage data as stored.

2. A method according to claim 1, wherein a logical IT service is represented by a data file whose data are grouped in one or more objects, called logical objects, which each represent at least one technical function of said logical IT service, and wherein said first linkage data is coupled to a respective logical object in the form of one or more object attribute data.

3. A method according to claim 1 or 2, wherein a virtual IT service is represented by a data file whose data are grouped in one or more objects, called virtual objects, which each represent at least one function of a respective virtual IT service, and wherein said second linkage data is coupled to a respective virtual data object in the form of one or more object attribute data.

4. A method according to claim 2 or 3, wherein a function to be performed by an IT service can be activated by activating the function of one or more of the objects of said IT service.

5. A method according to claim 2, 3 or 4, wherein a data file representing a logical or a virtual IT service can be accessed via at least one interface, called a service interface.

6. A method according to claim 5, wherein data of an object can be accessed via at least one interface, called an object interface.

7. A method according to any of the preceding claims, wherein said logical and virtual IT services are formed on the basis of their importance in the IT infrastructure.

8. A method according to any of the preceding claims, wherein said virtual IT services are associated with a process or several processes to be supported by said infrastructure.

9. A method according to any of the preceding claims, wherein an IT component is associated with several logical IT services.

10. A method according to any of the preceding claims, wherein said steps as described are carried out automatically for each new IT component that is added to said IT infrastructure.

11. A method according to any of the preceding claims, wherein an activity data file of a respective IT component is available, which comprises activity data representative of a current technical operation of said IT component, wherein said steps of reading, generating first and second linkage data and controlling the use of said IT component are also carried out on said activity data of said IT component.

12. A method according to claim 11, wherein said activity data of an IT component is read and processed periodically.

13. A method according to claim 11 or 12, wherein said logical IT services are automatically adapted during use on the basis of detected changes in one or more of said IT components.

14. A method according to claim 13, wherein on the basis of changes in said logical IT services influence thereof on said virtual IT services is determined.

15. A method according to claim 14, wherein virtual IT services are automatically configured and reconfigured on the basis of service objectives for the purpose of optimising the performance of processes supported by said IT infrastructure.

16. A device for automated control, in a digital information technology IT infrastructure built up of a multitude of configurable IT components that are operatively interconnected for technically supporting at least one process to be carried out by said IT infrastructure, of the use of IT components for supporting said at least one process, wherein a specifications data file of a respective IT component is available, which data file comprises specifications data representative of the technical properties and functions of said IT component, said device comprising:
- reading means for reading specifications data from said specifications data file of a respective IT component;
- grouping means for generating and storing first linkage data from said specifications data of said IT component as read, which first linkage data indicates a link between said IT component and one or more logical IT services on the basis of technical support to be provided to a logical IT service by said IT component;
- virtualisation means for generating and storing second linkage data that indicates a link between one or more logical IT services and one or more virtual IT services on the basis of technical support to be provided to a virtual IT service by a logical IT service; and
- control means for controlling the use of said IT component for supporting said at least one process on the basis of said first and second linkage data as stored.

17. A device according to claim 16, wherein said grouping means are arranged for generating a data file whose data are grouped in one or more objects, called logical objects, which each represent at least one technical function of a respective logical IT service and in which said first linkage data is coupled with a respective logical object in the form of one or more object attribute data.

18. A device according to claim 16 or 17, wherein said virtualisation means are arranged for generating a data file whose data are grouped in one or more objects, called virtual objects, which each represent at least one function of a respective virtual IT service, and in which said second linkage data is coupled with a respective virtual data object in the form of one or more object attribute data.

19. A device according to claim 17 or 18, wherein said control means are arranged for activating a function to be performed by an IT service by activating the function of one or more of said objects of said IT service.

20. A device according to claim 16, 17, 18 or 19, comprising specification means for associating an IT component with a logical IT service.

21. A device according to claim 16, 17, 18, 19 or 20, comprising optimisation means for associating a process supported by said IT infrastructure with a virtual IT service.

22. A device according to claim 16, 17, 18, 19, 20 or 21, comprising monitoring means arranged for monitoring the operation of one or more IT services and for reading activity data representative of the current technical operation of a respective IT component from said activity data file of said IT component.

23. A device according to claim 22, wherein said grouping means and said virtualisation means are arranged and operatively connected to said monitoring means for generating first and second linkage data from said activity data as read for forming said logical and virtual IT services, adapted to the current activity data of an IT component.

24. A device according to claim 16, 17, 18, 19, 20, 21 or 22, comprising optimisation means that are operatively connected to said monitoring means and said virtualisation means, which optimisation means operate to optimise the operation of said virtual IT services.

25. A device according to claim 24, wherein said optimisation means are operatively connected to said grouping means and said specification means for automatic grouping and regrouping of IT components for the purpose of optimising the performance of processes supported by said IT infrastructure.

26. A device according to any of the claims 25-33, wherein said means are comprised of one or more computers and software to be executed thereby.

27. A computer program comprising program code means, which computer program functions to carry out the method according to any of the claims 1-15 when said computer program is loaded in a working memory of a computer and is executed by said computer.

28. A computer program according to claim 27, which is arranged for being integrated in or added to a computer application for the joint execution of said computer program and said computer application by a computer.

29. A computer program product comprising program code means stored on a medium that can be read by a computer, which computer program operates to carry out said method according to any one of the claims 1-16 when said computer program is loaded in a working memory of a computer and is executed by said computer.

30. A computer program product according to claim 29, which is arranged for integrating said program code means in or adding said program code means to a computer application for the joint execution of said program code means and said computer application by a computer.
